# EUROPEAN PATENT SPECIFICATION

(11) **EP 0 752 541 B1**
(45) Date of publication and mention of the grant of the patent: **12.03.2003**
(21) Application number: 96305012.5
(22) Date of filing: 05.07.1996
(51) Int. Cl.: F16D 65/092, F16D 55/224

(54) **Disc Brake**
Scheibenbremse
Frein à disque

(30) Priority: 05.07.1995 GB 9513709
(43) Date of publication of application: 08.01.1997
(73) Proprietor: ArvinMeritor, Inc., Troy, MI 48084-7186 (US)
(72) Inventor: Sturgess, Peter George, Gwent, NP9 5HG, Wales (GB)
(74) Representative: Jones, John Bryn

(56) References cited:
- EP-A- 0 139 890
- EP-A- 0 347 523
- US-A- 3 124 217
- US-A- 4 360 081
- US-A- 4 632 227

## Description

This invention relates to a sliding caliper disc brake, primarily for motor vehicles, and of the kind having a carrier intended, in use, to be fixed to a vehicle, and a caliper mounted for sliding movement relative to the carrier, the carrier containing opposed friction pads for braking engagement with a rotary disc brake.

It is important in such disc brakes to ensure that a friction pad cannot be incorrectly assembled by being inadvertently fitted the wrong way round. The most commonly used type of friction pad has a lining of friction material carried on a rigid metal backplate and the aforesaid incorrect fitting would result in the metal backplate facing the rotary brake disc. The prevention of such incorrect fitting has hitherto been found to be difficult to achieve in disc brakes of the aforesaid kind, without introducing undue complexity.

It is known in conventional brakes for friction pads intended respectively for mounting at either side of the brake disc to have different profiles and whilst this expedient solves the problem of incorrect fitting, it results in relatively high manufacturing costs and inconvenience of assembly on a rapidly moving production line. It is also known to mount at least one of the pads on a pin serving as a caliper slide, so that braking torque from the pad is reacted on the pin. This is again a complex and expensive arrangement, both as regards manufacture and assembly. In a further known arrangement, pads at either side of the disc have identical profiles but can be fitted either way round i.e. with the backplate facing the disc.

US-A4360081 discloses a disc brake including a pair of friction pads and a radial biasing spring having a pair of engaging portions, each friction pad having respective cut-out portions for causing one of the engaging portions to engage only one of the pads and the other engaging means to engage only the other of the pads. The cut-out portions incidentally render each pad asymmetrical. However, it is possible to incorrectly assemble each of these pads in its holder with its friction lining facing outwardly.

An object of the present invention is to provide a sliding calliper disc brake having a simple and convenient arrangement which facilitates fitting of the friction pads into the brake whilst precluding the aforesaid incorrect assembly thereof.

According to the present invention, a sliding calliper disc brake is provided as claimed in claim 1.

In one convenient arrangement, the support surfaces of the carrier for each pad are relatively stepped and complementary stepping is provided on each pad.

Alternatively, the support surfaces of the carrier are coplanar and support the bases of the friction pads and a further surface of each carrier opening is provided in a plane different from that of the support surfaces and arranged such as to be adjacent to a complementary surface of the associated pad.

Conveniently, said further surface is arranged between a torque-reacting surface and a support surface of the carrier.

The invention will now be described, by way of example, with reference to the accompanying drawings in which:-
Figure 1 is a plan view of one form of sliding caliper disc brake of the invention;
Figure 2 is an exploded view of a carrier of the brake of Figure 1 and its associated friction elements;
Figure 3 is a view from one side of the carrier of Figure 2;
Figure 4 is a similar view to Figure 2 illustrating an alternative arrangement; and
Figure 5 is a view similar to Figure 3 of the carrier of Figure 4.

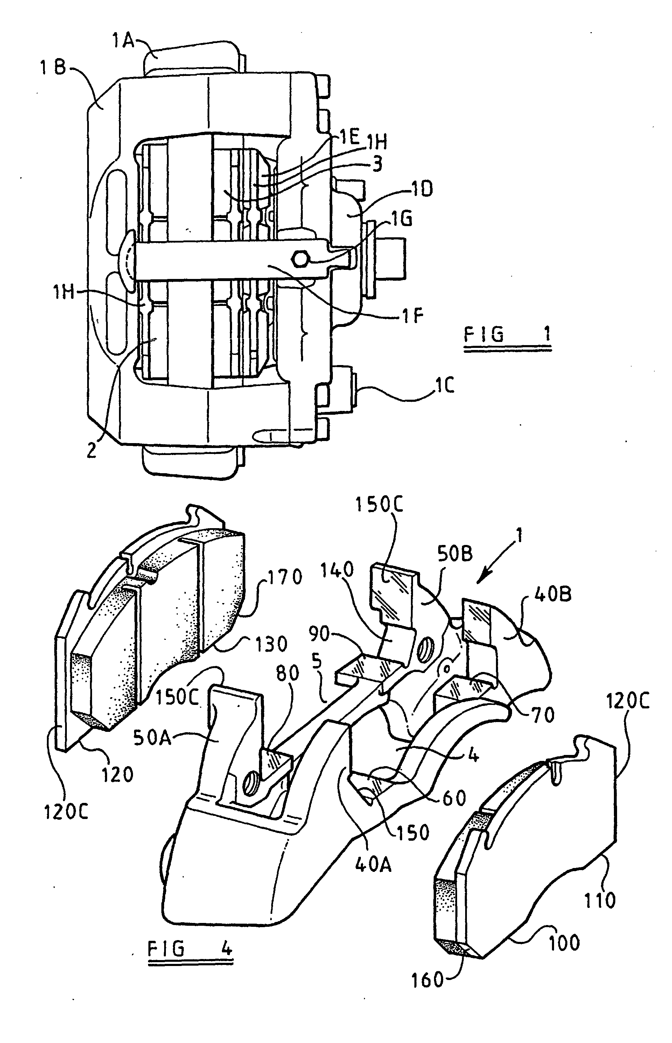

Referring first to Figure 1, the sliding caliper disc brake 1 illustrated therein has a carrier 1A for mounting on a fixed part of a vehicle adjacent a wheel to be braked and a caliper 1B slidably mounted on the carrier by way of pins one of which can be seen at 1C so as to be movable, in use, parallel to the rotary axis of a brake disc (not shown) in known manner. The carrier supports a pair of friction pads 2, 3 arranged, in use, respectively at either side of the brake disc, the pads 3 being arranged to be applied to the disc in use, directly via a spreader 1E by an actuator device 1D of any convenient mechanical or fluid-operated type, built into the caliper. The pad 2 is applied by the actuator indirectly to the disc, due to sliding of the caliper. The pads are retained within the carrier by a retention bar 1F bridging between them and secured to the caliper by a bolt 1G. The bar 1F bears upon shoe hold-down springs 1 H serving to urge the pads against support surfaces within the carrier to be described in detail hereafter.

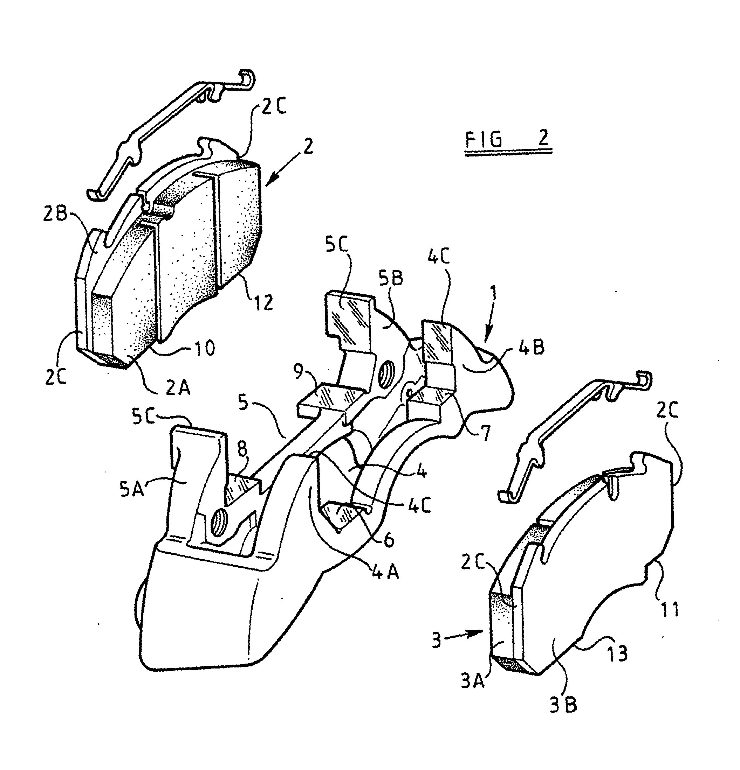

Figure 2 illustrates the carrier 1 of the disc brake together with its associated friction pad assemblies 2, 3 removed therefrom for the purpose of illustration.

The invention particularly concerns the manner in which the friction pads are mounted in the carrier. Each friction pad 2, 3 has a lining of friction material 2A, 3A securely mounted on a metal backing plate 2B, 3B thereof, in conventional manner. The carrier is provided with a pair of transversely extending axially aligned openings 4, 5 within which the friction pads are mounted, in use. The width of each of the openings is defined by a pair of upstanding lugs, those for the opening 5 being indicated at 5A, 5B and those for the opening 4, 4A, 4B, the upper ends of the openings being open adjacent the free ends of he lugs. Inner surface portions 4C, 5C of the lugs constitute abutment surfaces which are engaged, in use, by corresponding side surfaces 2C on the pad backplates so as to sustain braking forces arising on the pads during braking, the abutments 4A, 5A, or 4B, 5B coming to play depending upon the direction of rotation of rotary brake disc engaged by the pad assemblies when the brake is actuated.

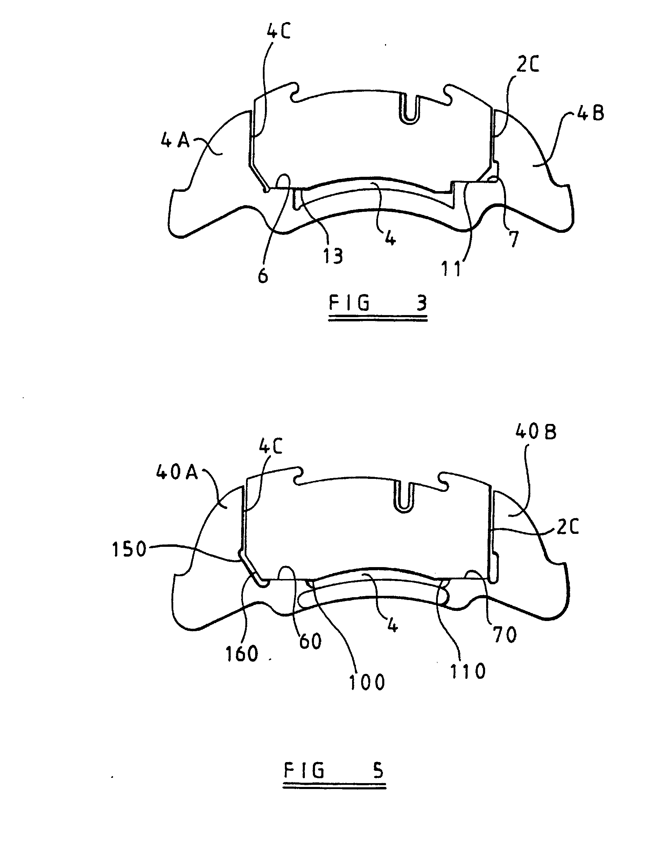

The friction pads are supported within the openings 4, 5 by pairs of support surfaces forming part of the base of the opening and which, for the opening 4, are indicated at 6, 7 and, for the opening 5, at 8, 9. In this particular embodiment, the surfaces 7, 8 lie at a higher level within the brake than the surfaces 6, 9, providing a stepped asymmetrical mounting arrangement. The backing plates of the friction pads are provided with corresponding recessed portions or cut-outs 10, 11 of complementary shape to the steps created by the respective raised surfaces 8 and 7, the undersurface of the pad assembly 13 at its opposite end to the recessed portions 10, 11 being at a level to rest on the surfaces 6, 9 when the recessed portions engage the raised support surfaces 8, 7, as can be seen more clearly from Figure 3 therefore be seen that it is only possible to fit each pad assembly in one specific orientation into one of the recesses, thereby ensuring that it is always fitted with the friction material 2A, 3A facing the brake disc. However, a further advantage arises by placing the raised portions 8, 7 respectively at opposite ends of the respective openings 4, 5, so that the relevant surfaces are at corresponding positions within the openings when the latter are viewed respectively from opposite sides of the brake. By rotating either of the pads through 180° transversely of its own plane, either pad can fit the opening at the opposite side of the brake so that the pads are non-handed.

In the alternative embodiment illustrated in Figures 4 and 5, the general shape and arrangement of the carrier 1 is the same as in the previous embodiment, the principal difference being in the arrangement of the friction pad support surfaces within the carrier, indicated at 60, 70, 80, and 90. By contrast with the previous embodiment, all of these surfaces are arranged in the same plane and are contacted, in use, by complementary flat surface portions 100, 110, 120, 130 of the friction pad assemblies. Braking torque is transmitted to the carrier in a similar manner to that described previously. In this embodiment, the necessary asymmetry to ensure correct fitting of the pads is obtained by a combination of an angle surface 160, 170 at one side of the pad backplate and a straight side surface 120C of the backplate at the other side of the pad. The surface 160, 170 is intended to lie adjacent to a correspondingly angled further surface 140, 150 respectively on the lugs 50B and 50A of the carrier and the straight side of the pad is intended to lie in close proximity to torque-reacting surfaces 50C of the lugs 50A, 50B. It will be seen that, by virtue of this arrangement, each pad can only be fitted into its corresponding opening with the friction lining of the pad facing inwardly towards the disc. Again, by providing the angled further surfaces 140, 150 at opposite ends and sides of the brake, so that they lie within the openings 4, 5 at corresponding positions when viewed respectively from opposite sides of the brake, each pad assembly can be fitted into the opposite opening, after rotation through 180° in a plane transverse to its own, so that the facility of non-handed pads is retained in this embodiment also.

The various support, torque-taking and further surfaces provided on the carrier would normally be produced by machining the cast carrier, although it would be possible to use original cast surfaces of the carrier for some or all of these, provided the cast surfaces can be formed with the necessary accuracy.

The support surfaces of the carrier and the engaging surfaces of the pads may be arranged in any convenient manner whilst respecting the overriding criteria of the pads being identical but asymmetrical and the support surfaces in the carrier openings being arranged to receive a pad when rotated transversely of its own plane through 180° with respect to its position within the other opening, but not otherwise.

The disc brake of the invention will be seen to have the advantage that the pads can be fitted in the brake by simply arranging them in the carrier openings, in the knowledge that they cannot be inserted the wrong way round and that the external pad surface portions referred to will engage their intended cooperating surfaces.

## Claims

1. A sliding calliper disc brake (1), comprising a carrier (1A) intended, in use, to be fixed to a vehicle, a calliper (1B) mounted for sliding movement relative to the carrier (1A) and a pair of friction pads (2,3) each having a lining of friction material (2A,3A) on one face thereof and having identical external profiles mounted in respective openings (4,5) in the carrier (1A), the pads (2,3) being supported within the carrier (1A) by engagement of external surface portions (10,11,12,13; 100,110,120,130) thereof with support faces (6,7,8,9; 60,70,80,90) of the carrier (1A), and surface portions (2C;120C) of the pads (2,3) serving to engage torque-reacting surface (4C,5C; 150C) of the carrier (1A), the pad (2,3) external profile being asymmetrical and the support and torque-reacting surfaces (6,7,8,9,4C,5C; 60,70,80,90) of the respective carrier openings (4,5) being arranged so that their positions in the carrier (1A) correspond when the respective openings (4,5) are seen from opposite sides of the carrier (1A), wherein surfaces (6,7,8,9,4C,5C; 60,70,80,90; 150C) of the carrier (1A) which define said openings (4,5) are rigid and arranged asymmetrically so as to correspond to the external profile of each said pad (2,3,) only in a specific pad orientation, whereby it is only possible to fit each said friction pad (2,3) into a respective said carrier opening (4,5) with the friction material (2A,3A) facing inwardly of the carrier (1A), for facing a brake disc of the vehicle in use.

2. A brake according to Claim 1, wherein said support surfaces (6,7,8,9) of the carrier (1A) for each pad (2,3) are relatively stepped and complementary stepping is provided on each pad (2,3).

3. A brake according to Claim 1, wherein said support surfaces (60,70, 80,90) of the carrier are co-planar and support the bases (100,110,120,130) of the friction pads and a further surface (140,150) of each carrier opening (4,5) is provided in a plane different from that of the support surfaces (60, 70, 80, 90) and arranged such as to be adjacent to a complementary surface (160, 170) of the associated pad.

4. A brake according to Claim 3, wherein said further surface (140, 150) is arranged between a torque-reacting surface (150C) and a support surface (60, 90) of the carrier.

5. A brake according to any one of the preceding claims, wherein each lining of friction material (2A, 3A) is carried by a rigid backplate (2B, 3B) and the external surface portions (10, 11, 12, 13; 100, 110, 120, 130) of the pads engaging the support surfaces (6, 7, 8, 9; 60, 70, 80, 90) within the carrier are formed on the pad backplates (2B, 3B).

6. A brake according to Claim 4, wherein the surface portions (10,11, 12, 13, 2C; 100, 120, 130, 120C) of each pad serving to engage the torque-reacting (4C, 5C; 150C) and support (6, 7, 8, 9; 60, 70, 80, 90) surfaces of the carrier are formed on the pad backplate (2B, 3B).

7. A friction pad (2, 3) for use in a sliding caliper disc brake (1), the pad having a lining of friction material (2A, 3A) on one face, and being supported, in use, in a selected one of two proposed openings (4, 5) of a carrier portion of the caliper by contact of external surface portions (10, 11, 12, 13; 100, 110, 120, 130) of the pad with support faces (6, 7, 8, 9; 60, 70, 80, 90) of the carrier and by surface portions (2C; 120C) of the pad engaging at least one torque reacting surface (4C, 5C; 150C) of the carrier, the external surface portions of the pad defining an external profile, the profile being asymmetrical so as to correspond, in one specific pad orientation, with an asymmetrical arrangement of the surfaces defining the openings, whereby it is only possible to fit each pad into the carrier opening with the friction material facing inwardly of the carrier, for facing a brake disc in use.

8. A pair of identical friction pads wherein each friction pad is a pad as claimed in Claim 7.

## Patentansprüche

1. Gleitsattelscheibenbremse (1), die aufweist: einen Träger (1A), der bei Verwendung zur Befestigung an einem Fahrzeug gedacht ist, einen Sattel (1B), der zur Gleitbewegung relativ zum Träger (1A) befestigt ist, und zwei Reibklötze (2, 3), die jeweils einen Belag aus Reibmaterial (2A, 3A) an einer Seite und identische Außenprofile haben, und die in Öffnungen (4, 5) in dem Träger (1A) angebracht sind, wobei die Klötze (2, 3) innerhalb des Trägers (1A) durch Angriff von äußeren Flächenabschnitten (10, 11, 12, 13; 100, 110, 120, 130) an Stützflächen (6, 7, 8, 9; 60, 70, 80, 90) des Trägers (1A) gestützt werden und Flächenabschnitte (2C; 120C) der Klötze (2, 3) dazu dienen, an Drehmomentreaktionsflächen (4C, 5C; 150C) des Trägers (1A) anzugreifen, wobei das Außenprofil der Klötze (2, 3) asymmetrisch ist und die Stütz- und Drehmomentreaktionsflächen (6, 7, 8, 9, 4C, 5C; 60, 70, 80, 90) der entsprechenden Trägeröffnungen (4, 5) derart angeordnet sind, daß ihre Positionen in dem Träger (1A) einander entsprechen, wenn die entsprechenden Öffnungen (4, 5) von gegenüberliegenden Seiten des Trägers (1A) aus gesehen werden, wobei die Flächen (6, 7, 8, 9, 4C, 5C; 60, 70, 80, 90; 150C) des Trägers (1A), die die Öffnungen (4, 5) definieren, starr sind und asymmetrisch angeordnet sind, so daß sie dem Außenprofil jedes Klotzes (2, 3) nur in einer speziellen Klotzorientierung entsprechen, wodurch jeder Reibklotz (2, 3) in die Trägeröffnung (4, 5) nur so eingebaut werden kann, daß das Reibmaterial (2A, 3A) einwärts des Trägers (1A) gewandt ist, damit es im Betrieb einer Bremsscheibe des Fahrzeugs zugewandt ist.

2. Bremse nach Anspruch 1, bei welcher die Stützflächen (6, 7, 8, 9) des Trägers (1A) für jeden Klotz (2, 3) relativ abgestuft sind und eine komplementäre Abstufung an jedem Klotz (2, 3) vorgesehen ist.

3. Bremse nach Anspruch 1, bei welcher die Stützflächen (60, 70, 80, 90) des Trägers koplanar sind und die Basen (100, 110, 120, 130) der Reibklötze stützen und eine weitere Fläche (140, 150) jeder Trägeröffnung (4, 5) in einer Ebene vorgesehen ist, die sich von derjenigen der Stützflächen (60, 70, 80, 90) unterscheidet und derart angeordnet ist, daß sie an eine komplementäre Fläche (160, 170) des zugehörigen Klotzes angrenzt.

4. Bremse nach Anspruch 3, bei welcher die weitere Fläche (140, 150) zwischen einer Drehmomentreaktionsfläche (150C) und einer Stützfläche (60, 90) des Trägers angeordnet ist.

5. Bremse nach einem der vorhergehenden Ansprüche, bei welcher jeder Belag aus Reibmaterial (2A, 3A) von einer starren Halteplatte (2B, 3B) gehalten wird und die äußeren Flächenabschnitte (10, 11, 12, 13; 100, 110, 120, 130) der Klötze, die an den Stützflächen (6, 7, 8, 9; 60, 70, 80, 90) innerhalb des Trägers angreifen, an den Klotzhalteplatten (2B, 3B) ausgebildet sind.

6. Bremse nach Anspruch 4, bei welcher die Flächenabschnitte (10, 11, 12, 13, 2C; 100, 120, 130, 120C) jedes Klotzes, die zum Angriff an den Drehmomentreaktionsflächen (4C, 5C; 150C) und den Stützflächen (6, 7, 8, 9; 60, 70, 80, 90) des Trägers dienen, an den Klotzhalteplatten (2B, 3B) ausgebildet sind.

7. Reibklotz (2, 3) zur Verwendung bei einer Gleitsattelscheibenbremse (1), wobei der Klotz einen Belag aus Reibmaterial (2A, 3A) an einer Seite hat und bei Verwendung in einer ausgewählten von zwei vorgeschlagenen Öffnungen (4, 5) eines Trägerabschnitts des Sattels durch Kontakt von äußeren Flächenabschnitten (10, 11, 12, 13; 100, 110, 120, 130) des Klotzes mit Stützflächen (6, 7, 8, 9; 60, 70, 80, 90) des Trägers und durch Flächenabschnitte (2C; 120C) des Klotzes gestützt wird, die an wenigstens einer Drehmomentreaktionsfläche (4C, 5C; 150C) des Trägers angreifen, wobei die äußeren Flächenabschnitte des Klotzes ein äußeres Profil definieren und wobei das Profil asymmetrisch ist, so daß es in einer speziellen Klotzorientierung einer asymmetrischen Anordnung der die Öffnungen definierenden Flächen entspricht, wodurch jeder Reibklotz in die Trägeröffnung nur so eingebaut werden kann, daß das Reibmaterial einwärts des Trägers gewandt ist, damit es bei Verwendung einer Bremsscheibe zugewandt ist.

8. Paar identischer Reibklötze, wobei jeder Reibklotz ein Klotz gemäß Anspruch 7 ist.

## Revendications

1. Un frein à disque avec étrier coulissant (1) comportant un support (1A) destiné, lors de l'utilisation, à être fixé à un véhicule, un étrier coulissant (1B) monté pour un mouvement coulissant par rapport au support (1A) et une paire de plaquettes de frottement (2,3) ayant chacune un revêtement en un matériau de frottement (2A, 3A) sur une de leurs faces et présentant des profils externes identiques montés dans des orifices respectifs (4,5) dans le support (1A), les plaquettes (2, 3) étant reçues en appui à l'intérieur du support (1A) par l'engagement des zones de surfaces externes (10, 11, 12, 13; 100, 110, 120, 130) de ces dernières avec les faces d'appui (6, 7, 8, 9 ; 60, 70, 80, 90) du support (1A), et des zones de surfaces (2C ; 120C) des plaquettes (2, 3) servant à engrener la surface réagissant au couple (4C, 5C) du support (1A), le profil externe de plaquette (2, 3) étant asymétrique et le support et les surfaces réagissant au couple (6, 7, 8, 9, 4C, 5C ; 60, 70, 80, 90, 150C) des orifices respectifs (4, 5) du support étant disposés de manière à ce que leurs positions dans le support (1A) correspandent lorsque les orifices respectifs (4, 5) sont vus des côtés opposés du support (1A), les surfaces (6, 7, 8, 9, 4C, 5C ; 60, 70, 80, 90, 150C) du support (1A) qui déterminent lesdits orifices (4, 5) étant rigides et disposées de façon asymétrique de manière à ne correspondre au profil externe de chaque plaquette (2, 3) que dans une orientation de plaquette spécifique de telle manière qu'il ne soit possible que de poser chacune desdites plaquettes (2,3) que dans lesdits orifices de support respectifs (4, 5), le matériau de frottement (2A, 3A) étant tourné vers l'intérieur du support (1A) en face du disque de frein du véhicule en utilisation.

2. Un frein selon la revendication 1, dans lequel lesdites surfaces d'appui (6, 7, 8, 9) du support (1A) de chaque plaquette (2, 3) sont disposées en échelons les unes par rapport aux autres et des échelons complémentaires sont prévus sur chaque plaquette (2,3).

3. Un frein selon la revendication 1, dans lequel lesdites surfaces d'appui (60, 70, 80, 90) du support sont co-planaires et reçoivent en appui les bases (100, 110, 120, 130) des plaquettes de frottement, et une autre surface (140, 150) de chaque orifice de support (4, 5) est prévue sur un autre plan que celui des surfaces d'appui (60, 70, 80, 90) et est disposée de manière adjacente à une surface complémentaire (160, 170) d'une plaquette associée.

4. Un frein selon la revendication 3, dans lequel ladite autre surface (140,150) est disposée entre une surface réagissant au couple (150C) et une surface d'appui (60, 90) du support.

5. Un frein selon une quelconque des revendications précédentes, dans lequel chaque revêtement en un matériau de frottement (2A, 3A) est supporté par un plateau de fond rigide (2B, 3B) et les zones de surfaces externes (10, 11, 12, 13; 100, 120, 130, 120C) des plaquettes engageant les surfaces d'appui (6, 7, 8, 9 ; 60, 70, 80, 90) à l'intérieur du support sont formées sur les plateaux de fond des plaquettes (2B, 3B).

6. Un frein selon la revendication 4, dans lequel les zones de surface (10, 11, 12, 13, 2C ; 100, 120, 130, 120C) de chaque plaquette servant à engager les surfaces réagissant au couple (4C, 5C ; 150C) et les surfaces d'appui (6, 7, 8, 9 ; 60, 70, 80, 90) du support sont formées sur le plateau de fond de la plaquette (2B ; 3B).

7. Une plaquette de frottement (2, 3) pour l'utilisation dans un frein à disque avec étrier coulissant (1), la plaquette présentant un revêtement en un matériau de frottement (2A, 3A) sur une face et étant reçue en appui, lors de l'utilisation, dans un des deux orifices proposés (4, 5) de la partie support de l'étrier par le contact de zones de surfaces externes (10, 11, 12, 13 ; 100, 110, 120, 130) de la plaquette avec des faces d'appui (6, 7, 8, 9 ; 60, 70, 80, 90) du support et par des zones de surfaces (2C ; 120C) de plaquette engageant au moius une surface réagissant au couple (4C, 5C ; 150C) du support, les zones de surpace externes de la plaquette déterminant un profil externe, le profit étant asymétrique pour correspondre, dans une orientation spécifique de la plaquette, à une disposition asymétrique des surfaces déterminant les orifices pour qu'il ne soit possible de poser chaque plaquette que dans l'orifice avec le matériau de frottement tourné vexs l'intérieur du support en face du disque de frein en utilisation.

8. Une paire de plaquettes de frottement identiques, dans laquelle chaque plaquette de frottement est une plaquette comme revendiqué dans la reveadication 7.
